# EUROPÄISCHE PATENTSCHRIFT

(11) **EP 2 844 890 B1**
(45) Veröffentlichungstag und Bekanntmachung des Hinweises auf die Patenterteilung: **17.01.2018**
(21) Anmeldenummer: 13715984.4
(22) Anmeldetag: 12.04.2013
(51) Int. Cl.: F16G 1/08, F16G 5/08

(54) **ANTRIEBSRIEMEN MIT VERBESSERTER TEXTILHAFTUNG**
DRIVE BELT HAVING IMPROVED TEXTILE ADHESION
COURROIE D'ENTRAÎNEMENT PRÉSENTANT UNE ADHÉRENCE TEXTILE AMÉLIORÉE

(30) Priorität: 03.05.2012 DE 102012103867
(43) Veröffentlichungstag der Anmeldung: 11.03.2015
(73) Patentinhaber: ContiTech Antriebssysteme GmbH, 30165 Hannover (DE)
(72) Erfinder: OBERT, Markus, 30457 Hannover (DE); TEVES, Reinhard, 30926 Seelze (DE); KANZOW, Henning, 30419 Hannover (DE)
(74) Vertreter: Preusser, Andrea
(86) Internationale Anmeldenummer: PCT/EP2013/057669
(87) Internationale Veröffentlichungsnummer: WO 2013/164178

(56) Entgegenhaltungen:
- EP-A2- 0 892 007
- EP-B1- 1 038 899
- DE-A1- 10 236 112
- JP-A- 2001 058 707

## Beschreibung

Die Erfindung betrifft einen Antriebsriemen mit einem Grundkörper aus einem radikalisch vernetztem polymeren Werkstoff mit elastischen Eigenschaften, umfassend eine Decklage als Riemenrücken sowie einen Unterbau mit einer Kraftübertragungszone, wobei
- nach einer ersten Variante in dem Grundkörper wenigstens ein textiler Zugstrang in Kordkonstruktion eingebettet ist oder
- nach einer zweiten Variante zwischen der Decklage und dem Unterbau eine Zwischenlage aus einem radikalisch vernetztem polymeren Werkstoff mit elastischen Eigenschaften angeordnet ist, wobei in der Zwischenlage wenigstens ein textiler Zugstrang in Kordkonstruktion eingebettet ist; oder
- nach einer dritten Variante wenigstens ein textiler Zugstrang in Kordkonstruktion eine Kordlage bildet, wobei zwischen der Kordlage und der Decklage und/oder zwischen der Kordlage und dem Unterbau eine Zwischenlage aus einem radikalisch vernetztem polymeren Werkstoff mit elastischen Eigenschaften angeordnet ist.

Antriebsriemen, die auch als Kraftübertragungsriemen bezeichnet werden und im Funktionszustand endlos geschlossen sind, können als Flachriemen, Keilriemen, Keilrippenriemen, Zahnriemen und Kupplungsriemen ausgebildet sein. Von besonderer Bedeutung sind hierbei der Zahnriemen und der Keilrippenriemen.

Die Antriebsriemen kommen unter anderem in einem Riemengetriebe, welches auch als Riementrieb, Hülltrieb oder Riemenantrieb bezeichnet wird, zum Einsatz.

Riementriebe finden vielfältige Anwendung im Maschinenbau, zum Beispiel im KFZ-Bereich zum Antrieb der Lichtmaschine, aber auch in Waschmaschinen oder Werkzeugmaschinen.

Die Elastizität unter Einbezug der Biegeelastizität eines Antriebsriemens wird dadurch erreicht, dass der Grundkörper und somit die Decklage und der Unterbau aus einem polymeren Werkstoff mit elastischen Eigenschaften bestehen, wobei hier insbesondere die beiden Werkstoffgruppen Elastomere und thermoplastische Elastomere zu nennen sind. Von besonderer Bedeutung sind Elastomere auf der Basis einer radikalisch vulkanisierten Kautschukmischung.

Der Antriebsriemen ist mit wenigstens einem eingebetteten textilen Zugstrang nach einer der drei eingangs genannten Varianten versehen, wobei insbesondere mehrere Zugstränge eine Festigkeitsträgerlage bzw. Zugträgerlage bilden. Dies bedeutet, dass die Festigkeitsträgerlage bzw. Zugträgerlage als Gewebe, Gewirke oder Gestrick ausgebildet sein kann. Die Zugstränge sind unter anderem für die Festigkeit des Antriebsriemens unter Spannung verantwortlich.

Üblicherweise werden die textilen Zugstränge bzw. Zugträgerlagen über geeignete Haftsysteme an den Grundkörper gebunden. Eine gute Haftung ist von großer Bedeutung, damit die Antriebsriemen eine dauerhafte Haltbarkeit erhalten.
Es ist bekannt, dass Antriebsriemen, deren Grundkörper im Wesentlichen auf der Basis von Styrolbutadienkautschuken (SBR) oder auch Polychloroprenkautschuken (CR) aufgebaut sind, eine gute Haftung zwischen Kautschuk und Zugstrang bzw. Zugträgerlage besitzen, wenn Zugstrang bzw. Zugträgerlage mit Kondensaten aus Resorcin, Fomaldehyd und einem Latex (RFL) als Haftschicht ausgerüstet sind. Derartige Riemen zeigen allerdings Schwächen bezüglich der Hitzebeständigkeit. Hitzebeständige Kautschukmischungen für den Grundkörper enthalten daher zumeist Kautschuktypen, die einen Gehalt an Doppelbindungen kleiner als 10% bezogen auf die Bindungen in der Polymerhauptkette besitzen. Diese Mischungen werden üblicherweise mit Schwefel vernetzt.. Die Erhöhung der Vernetzungsausbeute und der dynamischen Beständigkeit kann hierbei erhöht werden, indem alpha- beta ungesättigte Carbonsäuren, sowie deren Ester oder Salze, hinzugefügt werden. Zugstränge bzw. Zugträgerlagen für solche Riemen werden üblicherweise mit einer RFL-Schicht versehen, wobei allerdings auch hier nur mäßig gute Hafteigenschaften erreicht werden.
Für die Haftung von schwefelvernetzbaren Kautschukmischungen, die im Wesentlichen Kautschuktypen mit einem Gehalt an Doppelbindungen größer als 10% bezogen auf die Bindungen in der Polymerhauptkette besitzen, und Reifencorden sind daher bspw. aus DT 26 06 976 A1, EP 1 038 899 B1, oder US 6,054,527 B1 Haftvermittler auf der Basis von geblockten oder ungeblockten Isocyanaten bekannt. Diese können alleine oder in Kombination mit RFL, siehe WO2007051562A1, eingesetzt werden. Darüber hinaus offenbart die Druckschrift EP0892007 A2 einen Antriebsriemen gemäß dem Oberbegriff des Anspruchs 1. Daher besteht die Aufgabe der Erfindung darin, einen Antriebsriemen mit einem radikalisch vernetztem Grundkörper bereitzustellen, der sich durch eine verbesserte statische und dynamische Haftung an textilen Zugsträngen bzw. Zugträgerlagen auszeichnet. Gleichzeitig soll der Antriebsriemen eine gute Wärmebeständigkeit besitzen.

Gelöst wird diese Aufgabe dadurch, dass der Antriebsriemen mit einem Grundkörper aus einem radikalisch vernetztem polymeren Werkstoff mit elastischen Eigenschaften, umfassend eine Decklage als Riemenrücken sowie einen Unterbau mit einer Kraftübertragungszone, ausgestattet ist, wobei ferner in dem Antriebsriemen wenigstens ein textiler Zugstrang in Kordkonstruktion eingebettet ist und wobei der textile Zugstrang vollständig oder teilweise mit einem Haftmittel ausgerüstet ist, welches wenigstens ein teilweise oder vollständig geblocktes Isocyanat enthält.

Ein derartiger ausgerüsteter textiler Zugstrang zeichnet sich in radikalisch vernetzten Kautschukmischungen überraschenderweise durch eine besonders gute statische und dynamische Haftung aus.

Decklage und Unterbau bilden dabei als Gesamteinheit den elastischen Riemengrundkörper des Kraftübertragungsriemens, der aus einem radikalisch vernetzten elastomeren Werkstoff besteht, insbesondere in Form einer vulkanisierten Kautschukmischung. Als Kautschukkomponente wird vorzugsweise ein Kautschuk mit einem Gehalt an Doppelbindungen, bezogen auf die Bindungen in der Polymerhauptkette, zwischen 0 und 10 % verwendet.
Hierbei handelt es sich bevorzugt um teilweise oder vollständig hydrierten Nitrilkautschuk, Ethylen-alpha-Olefin-Elastomere, wie bspw. EPDM und EPM, Chloroprenkautschuk, Fluorkautschuk, Silikonkautschuk, Acrylatkautschuk oder Ethylen-Vinyl-Acetat-Copolymer, die jeweils alleine oder in Kombination verwendet werden können.

Die textilen Zugstränge können bevorzugt als Gewebe, Gewirke oder Gestrick ausgestaltet sein. Bevorzugt finden als Materialien für die Zugstränge Polyester und / oder Polyethylen und / oder Polyamid und / oder Polyimid und / oder Aramid und / oder Polyvinylacetat und / oder Polyetheretherketon und / oder Polyethylen-2,6-naphthalat und / oder Polyoxadiazol jeweils alleine oder Kombination Verwendung.
Vorzugsweise wird als Polyester Polyethylenterephthalat wie bspw. Trevira oder Diolen verwendet.
Vorzugsweise wird als Polyamid PA6.6 verwendet. Polyamide sind beispielsweise unter den Handelsnamen Nylon®, Cordura® oder Perlon® zu erwerben.
Als Aramide können para-Aramide, wie bspw. Twaron® oder Kevlar®, para-Aramid-Copolymer, wie bspw. Technora® oder meta-Aramide, wie bspw. Teijinconex® oder Nomex®, verwendet werden. Als Polyoxadiazol wird bspw. Arselon® verwendet.

Vorteilhaft für die Beständigkeit des Antriebsriemens ist es weiterhin, wenn der textile Zugstrang als Cord ausgebildet ist, bevorzugt mit einem Cordlängengewicht zwischen 3000 und 14000 dtex und / oder bevorzugt mit einer Ausdehnung von 60 bis 180 tpm (engl. "turns per meter", dt. "Drehungen pro Meter").
Erfindungsgemäß ist der textile Zugstrang vollständig oder teilweise mit einem Haftmittel ausgerüstet, welches wenigstens ein teilweise oder vollständig geblocktes Isocyanat enthält.
Das Isocyanat kann ein Polyisocyanat sein, welches ausgewählt ist aus der Gruppe enthaltend Hexamethylendiisocyanat (HDI) und / oder Isophorondiisocyanat (IPDI) und / oder 4,4'-Dicyclohexylmethandiisocyanat (H₁₂MDI) und / oder Hexahydrotoluylendiisocyanat (H₆TDI) und / oder 4,4'-Methylenbis(phenylisocyanat) (MDI), wobei jedes dieser Polyisocyanate als Biuret oder Uretdion oder Allophanat oder Isocyanurat oder Iminooxadiazindion vorliegen und alleine oder im Gemisch verwendet werden kann. Bevorzugt ist der Einsatz von MDI.

Das Isocyanat ist mit 3,5-Dimethylpyrazol, Caprolactam, Phenol, Butanoxim, Malonester, Acetoacetat, Alkoholen oder sekundären Aminen teilweise oder vollständig geblockt. Bevorzugt ist das Isocyanat mit Caprolactam vollständig geblockt.
Ein derartiges Haftmittel ermöglicht eine lösemittelarme bzw. lösemittelfreie Präparation, da es in wässrigem Medium verwendet werden kann. Dies bedeutet eine deutliche Reduzierung der Gesundheitsgefährdung für Mensch und Umwelt. Der Anteil an organischen Lösemitteln beträgt bevorzugt 0 bis 5 Gew.-%, besonders bevorzugt 0 Gew.-%.
Zusätzliche Haftmittel sind aufgrund der guten Hafteigenschaften des erfindungsgemäßen Haftmittels nicht notwendig.

Der Kraftübertragungsriemen findet Verwendung als Flachriemen, Keilriemen, bevorzugt als flankenoffener Keilriemen, Keilrippenriemen und Zahnriemen, wobei die letzten beiden besonders bevorzugt sind.
Der Antriebsriemen, insbesondere der Zahnriemen, aber auch der Keilrippenriemen, kann in einer besonders bevorzugten Ausführungsvariante mit einer Beschichtung, bevorzugt aufgebaut aus Basis- und Oberflächenbeschichtung, vollständig ummantelt sein oder aber wenigstens die Kraftübertragungszone ist mit einer Beschichtung versehen.
Die Basisbeschichtung besteht vorteilhafterweise aus einem Gewebe, Gewirke oder Gestrick. Bevorzugt findet als Material für das Gewebe, Gewirke oder Gestrick Baumwolle oder weitere Naturfasern, wie beispielsweise Flachs, Leinen oder Hanf Verwendung. Ebenso kann aber auch Aramid, Nylon und / oder Polyester verwendet werden.
Die Oberflächenbeschichtung kann zur Optimierung der Medienbeständigkeit, insbesondere zur Verbesserung der Ölbeständigkeit, bei gleichzeitig guter Gleitfähigkeit ein Fluorkunststoff sein, insbesondere Polytetrafluorethylen (PTFE) und/oder Polyvinylfluorid (PVF) und/oder Polyvinylidenfluorid (PVDF) sind besonders gut geeignet. Von besonderer Beutung ist PTFE. Der Fluorkunststoff kann nach einer neueren Entwicklung aus einer Folie, insbesondere einer PTFE-Folie, oder aus einem Folienverbund, insbesondere einer PTFE/PA-Folie bestehen, wobei bei einem Folienverbund das PTFE die unmittelbare Oberschicht bildet (siehe bspw. WO2009109434A1). Eine bevorzugte Alternative hierzu besteht darin, eine Textilauflage mit einem Fluorkunststoff zu tränken bzw. zu versiegeln. Ebenso kann eine Oberflächenbeschichtung auf der Basis wenigstens eines Acrylats (siehe bspw. WO2011029710A1) vorhanden sein. Die zusätzliche Maßnahme der Beschichtung, die auch für die Decklage angewandt werden kann, führt zu einer weiter erhöhten Lebensdauer des Antriebsriemens.

Die Erfindung wird nun anhand eines Ausführungsbeispiels unter Bezugnahme auf eine schematische Zeichnung näher erläutert. Die Erfindung ist nicht auf dieses Beispiel beschränkt. Es zeigt:
- Fig. 1: Längsschnitt durch einen Zahnriemen mit einer Beschichtung für die Kraftübertragungszone und für die Decklage.
- Fig. 2: Schematische Querschnittsdarstellung eines Keilrippenriemens

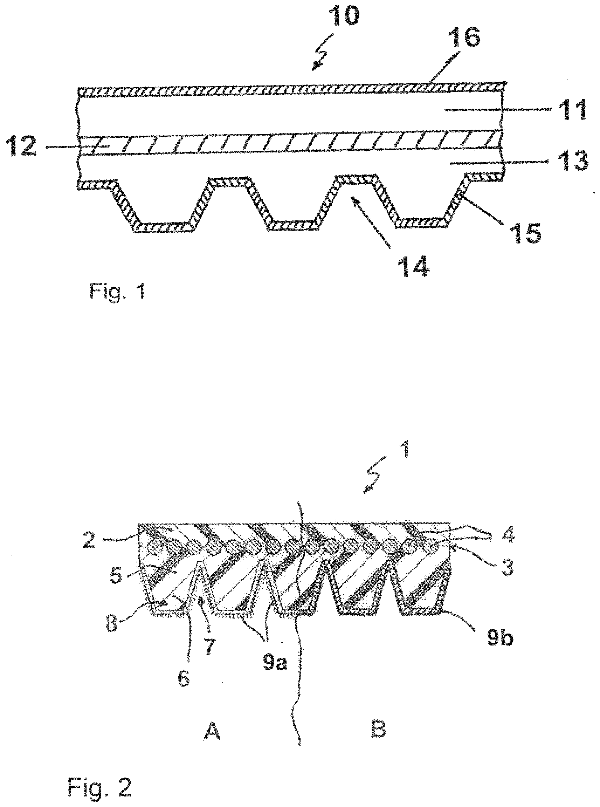

Figur 1 zeigt einen Antriebsriemen 10 in Form eines Zahnriemens mit einer Decklage 11 als Riemenrücken, einer Festigkeitsträgerlage 12 in Form von in Längsrichtung verlaufenden parallel angeordneten textilen Zugträgern sowie mit einem Unterbau 13. Der Unterbau umfasst dabei die Kraftübertragungszone 14. Sowohl die Decklage 11 als auch die Kraftübertragungszone 14 sind jeweils mit einer Beschichtung 15, 16 versehen.

Die Elastizität unter Einbezug der Biegeelastizität eines Antriebsriemens wird dadurch erreicht, dass der Grundkörper und somit die Decklage 11 und der Unterbau 13 aus einem polymeren Werkstoff mit elastischen Eigenschaften bestehen, wobei hier insbesondere die beiden Werkstoffgruppen Elastomere und thermoplastische Elastomere zu nennen sind. Erfindungsgemäß werden Elastomere auf der Basis einer radikalisch vernetzen Kautschukmischung, enthaltend wenigstens eine Kautschukkomponente und Mischungsingredienzien, verwendet.
Als Kautschukkomponente wird insbesondere ein Ethylen-Propylen-Kautschuk (EPM), ein Ethylen-Propylen-Dien-Kautschuk (EPDM), (teil)hydrierter Nitrilkautschuk (HNBR), Chloropren-Kautschuk (CR), Fluor-Kautschuk (FKM), Silikonkautschuk oder Ethylen-Vinyl-Acetat-Copolymer (EVA) eingesetzt, jeweils alleine oder in Kombination. Von besonderer Bedeutung ist dabei EPM oder EPDM oder ein EPM/EPDM-Verschnitt. Die Mischungsingredienzien umfassen dabei wenigstens einen Vernetzer oder ein Vernetzersystem (Vernetzungsmittel und Beschleuniger). Im Falle der radikalischen Vernetzung handelt es sich hierbei bevorzugt um wenigstens ein Peroxid und / oder um wenigstens ein Metalloxid.
Weitere Mischungsingredienzien sind zumeist noch ein Füllstoff und/oder ein Verarbeitungshilfsmittel und/oder ein Weichmacher und/oder ein Alterungsschutzmittel sowie gegebenenfalls weitere Zusatzstoffe, beispielsweise Fasern und Farbpigmente.

Die textilen Zugstränge 12 sind hier ohne Zwischenlage im Grundkörper eingebettet und erfindungsgemäß vollständig oder teilweise mit einem Haftmittel ausgerüstet, welches wenigstens ein teilweise oder vollständig geblocktes Isocyanat enthält.

Figur 2 zeigt einen Keilrippenriemen 1 mit einer Decklage 2 als Riemenrücken, einer Festigkeitsträgerlage 3 mit in Längsrichtung verlaufenden parallel angeordneten Zugträgern 4 sowie mit einem Unterbau 5. Der Unterbau weist eine Keilrippenstruktur auf, gebildet aus Rippen 6 und Rillen 7. Der Unterbau umfasst dabei die Kraftübertragungszone 8.

Die Decklage 2 und der Unterbau 5 bilden dabei als Gesamteinheit den elastischen Grundkörper auf der Basis eines thermoplastischen Elastomers oder auf der Basis eines Vulkanisates, insbesondere in Form einer radikalisch vulkanisierten Kautschukmischung, enthaltend wenigstens eine Kautschukkomponente und Mischungsingredienzien. Als Kautschukkomponente wird insbesondere ein Ethylen-Propylen-Mischpolymerisat (EPM), ein Ethylen-Propylen-Dien-Mischpolymerisat (EPDM), (teil)hydrierter Nitrilkautschuk (HNBR), Chloropren-Kautschuk (CR), Fluor-Kautschuk (FKM), eingesetzt, wiederum alleine oder in Kombination.Von besonderer Bedeutung ist dabei EPM oder EPDM oder ein EPM/EPDM-Verschnitt. Die Mischungsingredienzien umfassen dabei wenigstens einen Vernetzer oder ein Vernetzersystem (Vernetzungsmittel und Beschleuniger). Im Falle der radikalischen Vernetzung handelt es sich hierbei bevorzugt um wenigstens ein Peroxid und / oder um wenigstens ein Metalloxid.
Weitere Mischungsingredienzien sind zumeist noch ein Füllstoff und/oder ein Verarbeitungshilfsmittel und/oder ein Weichmacher und/oder ein Alterungsschutzmittel sowie gegebenenfalls weitere Zusatzstoffe, beispielsweise Fasern und Farbpigmente.
Die Zugträger 4 sind insbesondere Einzelcorde, beispielsweise aus Polyester und / oder Polyethylen und / oder Polyamid und / oder Polyimid und / oder Aramid und / oder Polyvinylacetat und / oder Polyetheretherketon und / oder Polyethylen-2,6-naphthalat. Die Zugträger 4 sind erfindungsgemäß vollständig oder teilweise mit einem Haftmittel ausgerüstet, welches wenigstens ein teilweise oder vollständig geblocktes Isocyanat enthält.
Innerhalb der Kraftübertragungszone 8 ist der Keilrippenriemen 1 gemäß bspw. DE 100 16 351 A1 oder DE 38 23 157 A1 mit einer Flockauflage 9 (Abschnitt A) versehen. Im Abschnitt B ist der Keilrippenriemen mit einem Gewebe versehen, und zwar unter dem Aspekt einer optimierten geschlossenen Oberflächenstruktur, die den Durchtritt des Vulkanisates, beispielsweise auf Basis EPDM, verhindert.
Die Decklage 2 des Keilrippenriemens 1 kann unbeschichtet sein. Häufig wird auch diese Decklage mit einer Beschichtung, wie sie bereits obig beschrieben ist, versehen.

### Bezugszeichenliste

### (Teil der Beschreibung)

- 10: Zahnriemen
- 11: Decklage als Riemenrücken
- 12: Festigkeitsträger in Form von Zugsträngen
- 13: Unterbau
- 14: Kraftübertragungszone
- 15: Beschichtung der Kraftübertragungszone
- 16: Beschichtung der Decklage
- 1: Keilrippenriemen
- 2: Decklage als Riemenrücken
- 3: Festigkeitsträgerlage
- 4: Zugträger in Form von Einzelkorden
- 5: Unterbau
- 6: Rippen
- 7: Rillen
- 8: Kraftübertragungszone
- 9a: Flockauflage (Abschnitt A)
- 9b: Gewebeauflage (Abschnitt B)

## Patentansprüche

1. Antriebsriemen (1, 10) mit einem Grundkörper aus einem radikalisch vernetztem polymeren Werkstoff mit elastischen Eigenschaften, umfassend eine Decklage (2, 11) als Riemenrücken sowie einen Unterbau (5, 13) mit einer Kraftübertragungszone (8, 14), wobei in dem Grundkörper wenigstens ein textiler Zugstrang (4, 12) in Kordkonstruktion eingebettet ist oder zwischen der Decklage (2, 11) und dem Unterbau (5, 13) eine Zwischenlage aus einem radikalisch vernetztem polymeren Werkstoff mit elastischen Eigenschaften angeordnet ist, wobei in der Zwischenlage wenigstens ein textiler Zugstrang (4, 12) in Kordkonstruktion eingebettet ist oder wenigstens ein textiler Zugstrang (4, 12) in Kordkonstruktion eine Kordlage bildet, wobei zwischen der Kordlage und der Decklage (11) und/oder zwischen der Kordlage und dem Unterbau (5, 13) eine Zwischenlage aus einem radikalisch vernetztem polymeren Werkstoff mit elastischen Eigenschaften angeordnet ist, wobei der textile Zugstrang (4, 12) vollständig oder teilweise mit einem Haftmittel ausgerüstet ist, welches wenigstens ein teilweise oder vollständig geblocktes Isocyanat enthält, **dadurch gekennzeichnet, dass** das Isocyanat mit 3,5-Dimethylpyrazol, Caprolactam, Butanoxim, Malonester, Acetoacetat, oder sekundären Aminen vollständig oder teilweise geblockt ist.

2. Antriebsriemen nach Anspruch 1, **dadurch gekennzeichnet, dass** mehrere parallel angeordnete textile Zugstränge (4, 12) im Grundkörper eingebettet sind oder ebenfalls mehrere parallel angeordnete textile Zugstränge (4, 12) in der Zwischenlage eingebettet sind oder wiederum mehrere parallel angeordnete textile Zugstränge (4, 12) die Kordlage bilden, wobei jeder textile Zugstrang in Kordkonstruktion vollständig oder teilweise mit einem Haftmittel ausgerüstet ist, welches wenigstens ein teilweise oder vollständig geblocktes Isocyanat enthält.

3. Antriebsriemen nach einem der Ansprüche 1 bis 2, **dadurch gekennzeichnet, dass** der polymere Werkstoff auf der Basis wenigstens eines Kautschuks mit einem Gehalt an Doppelbindungen, bezogen auf die Bindungen in der Polymerhauptkette, zwischen 0 und 10 % aufgebaut ist.

4. Antriebsriemen nach Anspruch 3, **dadurch gekennzeichnet, dass** der Kautschuk teilweise oder vollständig hydrierter Nitrilkautschuk, Ethylen-Propylen-Elastomer, Chloroprenkautschuk, Fluorkautschuk, Silikonkautschuk oder Ethylen-Vinyl-Acetat-Copolymer ist.

5. Antriebsriemen nach Anspruch 1, **dadurch gekennzeichnet, dass** das Isocyanat mit Caprolactam vollständig geblockt ist.

6. Antriebsriemen nach einem der Ansprüche 1 bis 5, **dadurch gekennzeichnet, dass** der textile Zugstrang (4, 12) aus wenigstens einem Polyester, Polyethylen, Polyamid, Polyimid, Aramid, Polyvinylacetat, Polyetheretherketonoder, Polyethylen-2,6-naphthalat aufgebaut ist.

7. Antriebsriemen nach einem der Ansprüche 1 bis 6, **dadurch gekennzeichnet, dass** der textile Zugstrang (4, 12) als Gewebe, Gewirke oder Gestrick vorliegt.

8. Antriebsriemen nach einem der Ansprüche 1 bis 7, **dadurch gekennzeichnet, dass** wenigstens die Kraftübertragungszone (8, 14) mit wenigstens einer Beschichtung versehen ist.

9. Antriebsriemen nach einem der Ansprüche 1 bis 8, **dadurch gekennzeichnet, dass** der Antriebsriemen ein Keilrippenriemen ist.

## Claims

1. Drive belt (1, 10), having a main body of a free-radically crosslinked polymeric material having elastic properties, comprising a cover ply (2, 11) as belt backing and also a substructure (5, 13) having a power transmission zone (8, 14), wherein at least one textile tensile strand (4, 12) in cord construction is embedded in the main body, or an interply of a free-radically crosslinked polymeric material having elastic properties is disposed between the cover ply (2, 11) and the substructure (5, 13), wherein at least one textile tensile strand (4, 12) in cord construction is embedded in the interply, or at least one textile tensile strand (4, 12) in cord construction forms a cord ply, wherein an interply of a free-radically crosslinked polymeric material having elastic properties is disposed between the cord ply and the cover ply (11) and/or between the cord ply and the substructure (5, 13), wherein the textile tensile strand (4, 12) is completely or partially endowed with an adhesion promoter which contains at least one partially or completely blocked isocyanate, **characterized in that** the isocyanate is completely or partially blocked with 3,5-dimethylpyrazole, caprolactam, butanone oxime, malonate ester, acetoacetate or secondary amines.

2. Drive belt according to Claim 1, **characterized in that** two or more parallel textile tensile strands (4, 12) are embedded in the main body or similarly two or more parallel textile tensile strands (4, 12) are embedded in the interply or again two or more parallel textile tensile strands (4, 12) form the cord ply, wherein every textile tensile strand in cord construction is completely or partially endowed with an adhesion promoter which contains at least one partially or completely blocked isocyanate.

3. Drive belt according to either of Claims 1 and 2, **characterized in that** the polymeric material is based on at least one rubber having a double bond content, based on the bonds in the polymer main chain, between 0 and 10%.

4. Drive belt according to Claim 3, **characterized in that** the rubber is partially or completely hydrogenated nitrile rubber, ethylene-propylene elastomer, chloroprene rubber, fluororubber, silicone rubber or ethylene-vinyl acetate copolymer.

5. Drive belt according to Claim 1, **characterized in that** the isocyanate is completely blocked with caprolactam.

6. Drive belt according to any one of Claims 1 to 5, **characterized in that** the textile tensile strand (4, 12) is constructed of at least one polyester, polyethylene, polyamide, polyimide, aramid, polyvinyl acetate, polyetheretherketone or poly(ethylene 2,6-naphthalate).

7. Drive belt according to any one of Claims 1 to 6, **characterized in that** the textile tensile strand (4, 12) is present in the form of a woven or knitted fabric.

8. Drive belt according to any one of Claims 1 to 7, **characterized in that** at least the power transmission zone (8, 14) is provided at least one coating.

9. Drive belt according to any one of Claims 1 to 8, **characterized in that** the drive belt is a V-ribbed belt.

## Revendications

1. Courroie d'entraînement (1, 10) comprenant un corps de base constitué d'un matériau polymère réticulé par voie radicalaire présentant des propriétés élastiques, et comprenant une couche de recouvrement (2, 11) en tant que dos de courroie, ainsi qu'une sous-structure (5, 13) présentant une zone de transmission de force (8, 14), au moins un brin de traction textile (4, 12) réalisé en corde étant incorporé dans le corps de base, ou une couche intermédiaire en un matériau polymère réticulé par voie radicalaire présentant des propriétés élastiques étant agencée entre la couche de recouvrement (2, 11) et la sous-structure (5, 13), au moins un brin de traction textile (4, 12) réalisé en corde étant incorporé dans la couche intermédiaire, ou au moins un brin de traction textile (4, 12) réalisé en corde formant une couche de corde, une couche intermédiaire en un matériau polymère réticulé par voie radicalaire présentant des propriétés élastiques étant agencée entre la couche de corde et la couche de recouvrement (11) et/ou entre la couche de corde et la sous-structure (5, 13), le brin de traction textile (4, 12) étant entièrement ou en partie revêtu d'un adhésif qui contient au moins un isocyanate en partie ou entièrement bloqué, **caractérisée en ce que** l'isocyanate est bloqué entièrement ou en partie avec du 3,5-diméthylpyrazole, du caprolactame, du butanoxime, de l'ester malonique, de l'acétocétate ou des aminés secondaires.

2. Courroie d'entraînement selon la revendication 1, **caractérisée en ce que** plusieurs brins de traction textiles agencés en parallèle (4, 12) sont incorporés dans le corps de base ou plusieurs brins de traction textiles agencés en parallèle (4, 12) sont également incorporés dans la couche intermédiaire ou plusieurs brins de traction textiles agencés en parallèle (4, 12) forment encore la couche de corde, chaque brin de traction textile réalisé en corde étant revêtu entièrement ou en partie avec un adhésif, qui contient au moins un isocyanate en partie ou entièrement bloqué.

3. Courroie d'entraînement selon l'une quelconque des revendications 1 à 2, **caractérisée en ce que** le matériau polymère est à base d'au moins un caoutchouc ayant une teneur en doubles liaisons, par rapport aux liaisons dans la chaîne principale polymère, comprise entre 0 et 10 %.

4. Courroie d'entraînement selon la revendication 3, **caractérisée en ce que** le caoutchouc est un caoutchouc de nitrile en partie ou entièrement hydrogéné, un élastomère d'éthylène-propylène, un caoutchouc de chloroprène, un caoutchouc fluoré, un caoutchouc de silicone ou un copolymère d'éthylène-acétate de vinyle.

5. Courroie d'entraînement selon la revendication 1, **caractérisée en ce que** l'isocyanate est entièrement bloqué avec du caprolactame.

6. Courroie d'entraînement selon l'une quelconque des revendications 1 à 5, **caractérisée en ce que** le brin de traction textile (4, 12) est constitué d'au moins un polyester, un polyéthylène, un polyamide, un polyimide, un aramide, un polyacétate de vinyle, une polyéther-éther-cétone ou un 2,6-naphtalate de polyéthylène.

7. Courroie d'entraînement selon l'une quelconque des revendications 1 à 6, **caractérisée en ce que** le brin de traction textile (4, 12) se présente sous la forme d'un tissu ou d'un tricot.

8. Courroie d'entraînement selon l'une quelconque des revendications 1 à 7, **caractérisée en ce qu'**au moins la zone de transmission de force (8, 14) est munie d'au moins un revêtement.

9. Courroie d'entraînement selon l'une quelconque des revendications 1 à 8, **caractérisée en ce que** la courroie d'entraînement est une courroie trapézoïdale crantée.
